# EUROPEAN PATENT SPECIFICATION

(11) **EP 4 642 654 B1**
(45) Date of publication and mention of the grant of the patent: **07.10.2026**
(21) Application number: 23913252.5
(22) Date of filing: 21.12.2023
(51) Int. Cl.: B60C 7/10, B60C 7/22, B60C 7/24, B60C 7/14, B60C 11/02

(54) **AIRLESS WHEEL**
LUFTLOSES RAD
ROUE SANS AIR

(30) Priority: 28.12.2022 TR 2022021036
(43) Date of publication of application: 05.11.2025
(73) Proprietor: Gazi Universitesi Rektorlugu, 06560 Yenimahalle/Ankara (TR)
(72) Inventor: ERKUL, Kagan, 06690 Cankaya/Ankara (TR); OZKAN, Murat Tolga, 06500 Ankara (TR); ERDEMIR, Fulya, 06932 Ankara (TR)
(74) Representative: Sevinç, Cenk
(86) International application number: PCT/TR2023/051621
(87) International publication number: WO 2024/144654

(56) References cited:
- EP-A1- 3 162 592
- CN-A- 107 336 566
- JP-A- 2010 137 671
- JP-A- 2018 039 479
- KR-A- 20160 121 900
- KR-A- 20190 013 298
- KR-A- 20220 060 967
- KR-B1- 101 582 038
- KR-B1- 102 388 856
- US-A1- 2012 060 991
- US-A1- 2020 171 884

## Description

### Technical field of the invention

The invention relates to an airless wheel that is configured to reduce the risk of accidents caused by the explosion of air-pressurised tires and that is configured to prevent the damage caused to the nature by the high amounts of tire scrap created by burst tires.

### State of the Art

The tire consists of a combination of rubber, cord fabric, steel wires and various chemicals and ensures the vehicle's contact with the ground. Generally, they initiate the initial movement of the motorised or non-motorised land transport vehicle, accelerate it and cause it to stop, by rubbing on the ground with the air it carries. They are produced in various sizes, types and structures according to their usage areas.

There are different types of tires according to the weather conditions in which they will be used. There are summer tires designed for use in moderate weather, all-season tires suitable for use in various weather conditions, and winter tires designed for use in cold weather conditions. Summer and winter tires used during seasonal transitions cause a loss of cost and time. Most expansion-related effects, such as air temperature changing gas pressure, do not affect airless tires. In airless tires, the creation of a tire surface suitable for ground conditions and the adhesion properties of these tires to the ground are better than air pressure tires.

Air pressure wheels, which are widely used in vehicles, have problems such as explosion, pressure drop and gas expansion. Instead of a gas-pressure wheel structure that needs to be constantly controlled, airless wheels that maintain their structural properties as long as they maintain their elastic properties are needed. There are many reasons why the industry offers airless tires to the user. There is no risk of an airless tire bursting and therefore no plastic or rubber material scrap is created. The most important result of not creating scrap is preventing potential damage to nature. In the state of the art, airless tires are produced. Internal support structures have been designed specifically for these wheels to absorb impact pressure and increase their service life. However, the fact that the support structures that absorb impacts are not able to meet the rolling motion and impact loads constitutes a major deficiency.

Although various suggestions and applications have been developed for airless tires in the state of the art, these developments are not sufficient. Some applications for inventions developed to this end are given below.

The invention, which is the subject of the application numbered "US4832098A" in the state of the art, relates to the transportation of patients who cannot move on their own. The invention involves a non-pneumatic tire ("NPT") being integrally moulded from a tough, flexible elastomeric material with certain specifications to form a single structure comprising outer and inner cylindrical coaxial and co-extending elements ("hoops"). The outer hoop is supported and cushioned by a plurality of circumferentially spaced planar rib members (strips) and a planar central web member (web) connecting the hoops at circumferential centrelines. In the invention, it has been observed that strips are lined up radially in the range of 15° to 75° on radial planes intersecting at their inner ends. The one-way angles of the design do not provide the same effect for the forward-backward configuration of the vehicle. With design improvements, it is necessary to create a load-supporting structure that is constantly exposed to compression and tensile forces while moving on the ground during operation and to increase its holding properties.

The invention, which is the subject of the application numbered "TR 2022/002071" in the state of the art, relates to a new wheelbarrow wheel configuration comprising a tire whose weight is reduced to facilitate its use by lightening the total weight of the wheelbarrow and to enable more load to be carried, without compromising the diameter of the wheelbarrow wheel which occupies a large place in the total weight of the wheelbarrow, and whose wall thickness is at most semicircular in size and form, a rim on which the tire sits, and multiple retaining parts located on the inner surface of the tire facing the rim, allowing the tire to sit on the rim by passing the tire into the channel on the rim, and preventing the tire from coming off the rim.

The invention, which is the subject of the application numbered "CN212332303U" in the state of the art, relates to the field of tires, especially to a non-pneumatic tire, a flexible sleeve non-pneumatic tire with high cushioning and shock absorption performance. The invention combines the tire crown with the flexible sleeve outer ring, and the flexible sleeve inner ring is combined with the rigid rim. The two types of contacts adopt the tight fit feature and are also joined by a polyurethane adhesive. The pattern of the invention ensures that the wheel can have a stable structure under loading. However, this pattern restricts the rolling movement and provides poor performance during acceleration and use in traffic.

The invention, which is the subject of the application numbered " KR101582038B1" in the state of the art, relates to a non-pneumatic tire having a detachable structure in which a tread portion including a reinforcing material and a bead core for maintaining shape, and a buffer unit coupling the tread portion to the rim, are configured such that the tread portion and/or buffer portion is divided into 2 to 8 parts. The invention further relates to a non-pneumatic tire that eliminates air-pressure-related risks such as puncture, allows consumers to selectively attach different tread portions according to desired driving performance or driving environment, and reduces replacement cost by enabling replacement of only the tread portion, the buffer part, or a retainer ring fixing the tread portion and buffer.

When the state of the art is examined, there are flexible sleeve non-pneumatic tires with high cushioning and shock absorption performance. In airless wheels in the state of the art, only patterns that enable them to absorb impacts and loads have been studied. However, there are no structures that compensate for the rolling effects for the rotational movement of the wheel. Therefore an airless tire that can be used in all kinds of road and climate conditions, including summer and winter, in order to prevent accidents due to the risk of air leakage, and is designed to be used in passenger cars, off-road vehicles, military personnel transport vehicles, with scooters, micro mobility etc., in widely used transportation vehicles such as aviation, space and defence, in sectors where heavy duty machines are used such as mining, agriculture and construction working under extreme conditions, in extraterrestrial exploration vehicles, forklifts and various logistics vehicles due to different atmospheric conditions, is needed not only to absorb impacts and loads but also to meet rolling effects.

As a result, due to the negativities described above and the inadequacy of existing solutions on the subject, it has become necessary to make a development in the relevant technical field.

### The aim of the invention

The invention relates to an airless wheel that reduces the risk of accidents caused by the explosion of air-pressurised tires and prevents the damage caused to the nature by the high amounts of tire scrap created by burst tires.

The most important aim of the invention is to ensure that the support structures that absorb impacts can absorb rolling motion and impact loads. In this way, the wheel is both more durable and can reach higher speeds.

Another aim of the invention is to ensure that there is no risk of tire explosion, thus preventing the formation of plastic and rubber material scrap.

Another aim of the invention is to save time by comprising a simple disassembly-assembly structure.

### Description of the drawings

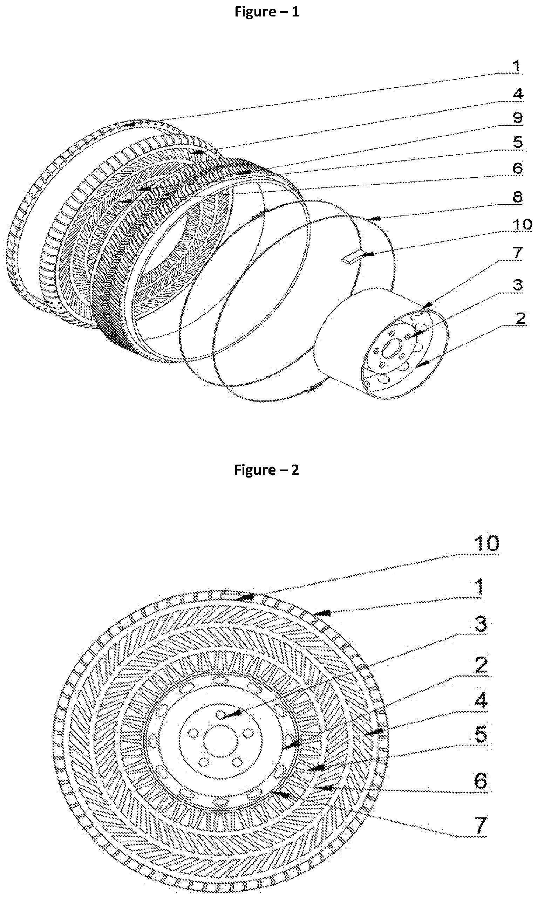

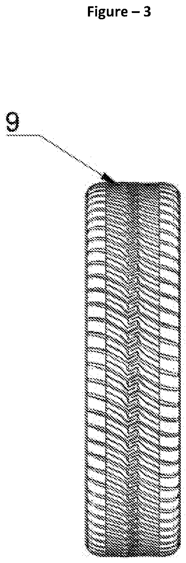

**FIGURE-1** is a drawing showing the layers of the airless tire that is the subject of the invention.
**FIGURE-2** is a drawing showing the view of the airless tire that is the subject of the invention.
**FIGURE-3** is the drawing showing the view of the airless tire that is the subject of the invention.

### Reference numbers

- **1.**: Tire tread holder
- **2.**: Rim
- **3. 4.**: Bolt connection hole Upper layer support structure
- **5.**: Inner layer support structure
- **6.**: Middle layer support structure
- **7.**: Rim outer surface
- **8.**: Tire tread tension rope
- **9.**: Tire tread **10.** Tension rope tightening gap plug

### Description of the invention

The invention relates to an airless wheel that can be used in all kinds of road and climate conditions, including summer and winter, in order to prevent accidents due to the risk of air leakage, and is designed to be used in passenger cars, off-road vehicles, military personnel transport vehicles, with scooters, micro mobility etc., in widely used transportation vehicles such as aviation, space and defence, in sectors where heavy duty machines are used such as mining, agriculture and construction working under extreme conditions, in extraterrestrial exploration vehicles, forklifts and various logistics vehicles due to different atmospheric conditions.

The tire tread (9) is the area of the tire that comes into contact with the ground while driving on the road. The tire tread (9) has treads suitable for seasonal conditions and can be replaced. A plurality of replaceable tire treads (9) suitable for various seasonal conditions, wherein a first tire tread (9) of said plurality of replaceable tire treads (9) is mounted on a tread holder (1) of the airless wheel. wherein said first tire tread (9) is in contact with the ground while the tire is travelling on the road. Wherein in a mounted state on the airless wheel each of the replaceable tire treads (9) provides damping of the loads that the wheel is exposed to due to the weight of the vehicle to which it is attached and the road on which it moves. Depending on seasonal conditions, road conditions and even load-carrying capacity, tire pattern changes roadholding and load-carrying capacity. These can be replaced with different patterns according to various vehicle types, such as defence vehicles, space vehicles, passenger, and cargo transport vehicles (for scooters and all kinds of motor-electric road vehicles), climate conditions and load carrying capacity. After purchasing the tire, the user can use it for many years (until the main body tire wears out completely) by simply changing the replaceable tire patterns.

The tire tread holder (1) ensures that the tire tread (9) is held.

The tire tread tension rope (8) is adjustable to enable the first tire tread (9) to be mounted on the tire tread holder (1).

The tension rope tightening gap plug (10), namely at least one tension rope tightening gap plug (10) located in the at least one tire tread holder (1), is used in the replacement operations of the tire tread (9) located in the tire tread holder (1), wherein the at least one tension rope tightening gap plug (10) allows the first tire tread (9) to be held, and in cases where replacement is required during seasonal transitions, the tension rope tightening gap plug (10) on the tire tread holder (1) is opened and the tire tread tension rope (8) is loosened, and the tire tread (9) replacement process is carried out without the need for any equipment.

The rim (2) is connected to the axle system of the vehicles and allows the tire to be mounted on the at least one rim. The shape of the rim (2) is produced in accordance with the deep drawing manufacturing method. The rim outer surface (7) is the part of the rim (2) where it meets the surface of the inner layer support structure (5) of the tire. Wherein an outer surface is joined by adhering the rim (2) to a surface of an inner layer support structure (5) of an airless tire of the airless wheel, wherein the at least one rim connects the inner layer support structure (5) of the airless tire. The rim outer surface (7) has a smooth and adhesive surface, unlike common rims. The rim outer surface (7) and the tire part are adhered with industrial resins that can meet the effects of rolling resistance and speed.

The bolt connection hole (3) is located on the rim (2) and enables the rim (2) to be fixed to the vehicle with bolts. The airless wheel can be mounted on the vehicle with bolt connections (3), just like a standard wheel. Since it does not contain a pressurised gas, it does not have structures such as sealing elements, valves, or steel belts. Bolt connection holes (3) are produced in standard sizes and are therefore easy to install.

The load to which the airless tire is exposed is first absorbed in the tire tread holder (1). The main damping occurs in the upper layer support structure (4), inner layer support structure (5) and middle layer support structure (6) of the airless tire.

The inner layer support structure (5) is the layer in contact with the outer surface of the rim. The inner layer support structure (5) consists of support structures with an auxetic structure and triangular geometry that can absorb impacts that may come from different directions. The middle layer support structure (6) is located between the inner layer support structure (5) and the upper layer support structure (4) and consists of counterclockwise inclined support structures that can absorb impacts that may come from different directions. The upper layer support structure (4) consists of clockwise inclined support structures in contact with the middle layer support structure (6). By means of the support structures having three layers, the impacts received by the wheel are converted into rolling motion through these layers. In this way, the wheel can reach higher speeds.

Each of the tire tread holder (1), the first tire tread (9) and tension rope tightening gap plug (10) of the wheel are produced from rubber, elastomer, and plastic composite materials. The airless wheel rim (2) and the tension rope (8) are produced from metal and/or composite materials.

The airless wheel basically consists of the tire tread holder (1), the tire tread (9), the tire tread tension rope (8), the airless wheel rim (2) and the connection holes (3). The upper layer support structure (4), inner layer support structure (5) and middle layer support structure (6) are also basic elements for the airless wheel, which provides suspension with the principle of transmission of forces.

The loads that the wheel is exposed to due to the weight of the vehicle to which it is attached and the road on which it moves are absorbed by the tire tread (9). There is a damping inner layer support structure (5) around the rim, separating the main damping elements with layers. The inner layer support structure (5) of the airless tire and the rim (2) are bonded by adhesion. The airless wheel rim, unlike common rims, has a smooth and adhesive rim outer surface (7). The rim (2) has standard machine elements in terms of fasteners and dimensions.

The resistances that occur as a result of the rotation of the wheel are met by these inner auxetic patterns, that is, the upper layer support structure (4), the inner layer support structure (5) and the middle layer support structure (6). Basically, a wheel is expected to absorb the impact it receives from the ground and not damage the rim (2). The pattern used in airless wheel support structures is the element that distributes these forces. This prevents sudden collapse in case the wheel is damaged.

## Claims

1. An airless wheel that is configured to reduce the risk of accidents caused by the explosion of air-pressurised wheels and that is configured to prevent the damage caused to the nature by the high amounts of tire scrap created by burst wheels, airless wheel comprising:
- a plurality of replaceable tire treads (9) suitable for various seasonal conditions, wherein a first tire tread (9), of said plurality of replaceable tire treads (9) is mounted on a tread holder (1) of the airless wheel, wherein said first tire tread (9) is in contact with the ground while the tire is travelling on the road, wherein in a mounted state on the airless wheel each of the replaceable treads (9) provides damping of the loads that the airless wheel is exposed due to the weight of the vehicle to which it is attached and the road on which it moves,
the airless wheel being **characterised in that** it further comprises:
- at least one adjustable tire tread tension rope (8) to enable the first tire tread (9) to be mounted on the tire tread holder (1),
- at least one tension rope tightening gap plug (10) located in the at least one tire tread holder (1), the at least one tension rope tightening gap plug (10) allows the first tire tread (9) to be held, and the opening of the at least one tension rope tightening gap plug (10) allows the first tire tread (9) to be changed according to seasonal conditions by loosening or tightening the tire tread tension rope (8),
- at least one rim (2), which comprises at least one bolt connection hole (3) located on the rim (2) that allows the rim (2) to be fixed to the vehicle with bolts, wherein an outer surface of the rim (2) is bonded to a surface of an inner layer support structure (5) of an airless tire of the airless wheel, wherein the at least one rim connects the inner layer support structure (5) of the airless tire to the axle system of the vehicles and allows the tire to be mounted on the at least one rim, wherein the at least one inner layer support structure (5) comprises support structures in auxetic structure and triangular geometry that absorbs impacts coming from different directions in contact with the rim outer surface (7),
wherein the airless wheel further comprises:
- at least one middle layer support structure (6) that is inclined counterclockwise, said at least one middle layer support structure (6) located between the inner layer support structure (5) and at least one upper layer support structure (4) and consisting of counterclockwise inclined support structures that can absorb impacts that may come from different directions,
- the at least one upper layer support structure (4) comprising clockwise inclined auxetic support structures, in contact with the middle layer support structure (6).

2. Airless wheel according to Claim 1, wherein the tire inner layer support structure (5) is adhered to the outer surface of the rim (7) with industrial resins.

3. Airless wheel according to Claim 1, wherein each of the tire tread holder (1), the first tire tread (9) and tension rope tightening gap plug (10) are made of any of the rubber, elastomer, or plastic composite materials.

4. Airless wheel according to Claim 1, wherein the rim (2) and tension rope (8) are made of metal and/or composite material.

## Patentansprüche

1. Ein luftloses Rad, das so ausgelegt ist, dass es das Risiko von Unfällen verringert, die durch die Explosion von mit Luft unter Druck stehenden Rädern verursacht werden, und das so ausgelegt ist, dass es die durch die großen Mengen an Reifenabfällen, die bei geplatzten Rädern entstehen, verursachten Umweltschäden verhindert, wobei das luftlose Rad Folgendes umfasst:
- eine Vielzahl austauschbarer Reifenlaufflächen (9), die für verschiedene saisonale Bedingungen geeignet sind, wobei eine erste Reifenlauffläche (9) aus der Vielzahl der austauschbaren Reifenlaufflächen (9) auf einem Laufflächenträger (1) des luftlosen Rades montiert ist, wobei die erste Reifenlauffläche (9) während der Fahrt auf der Straße Kontakt mit dem Boden hat, wobei im montierten Zustand am luftlosen Rad jedes der austauschbaren Laufflächenprofile (9) eine Dämpfung der Belastungen bewirkt, denen das luftlose Rad aufgrund des Gewichts des Fahrzeugs, an dem es angebracht ist, und der Straße, auf der es sich bewegt, ausgesetzt ist,
wobei das luftlose Rad **dadurch gekennzeichnet ist, dass** es ferner umfasst:
- mindestens ein einstellbares Spannseil (8) für die Reifenlauffläche, um die Montage der ersten Reifenlauffläche (9) am Reifenlaufflächenträger (1) zu ermöglichen,
- mindestens ein Spannseil-Spannspaltstopfen (10), der sich in dem mindestens einen Reifenlaufflächenträger (1) befindet; der mindestens eine Spannseil-Spannspaltstopfen (10) ermöglicht das Halten der ersten Reifenlauffläche (9), und die Öffnung des mindestens einen Spannseil-Spannspaltstopfens (10) ermöglicht es, die erste Reifenlauffläche (9)
je nach saisonalen Bedingungen durch Lösen oder Spannen des Reifenlaufflächen-Spannseils (8) angepasst werden kann,
- mindestens eine Felge (2), die mindestens ein an der Felge (2) angeordnetes Schraubverbindungsloch (3) umfasst, das es ermöglicht, die Felge (2) mit Schrauben am Fahrzeug zu befestigen, wobei eine Außenfläche der Felge (2) mit einer Oberfläche einer Innenschicht-Stützstruktur (5) eines luftlosen Reifens des luftlosen Rads verbunden ist, wobei die mindestens eine Felge die Innenschicht-Stützstruktur (5) des luftlosen Reifens mit dem Achssystem des Fahrzeugs verbindet und die Montage des Reifens auf der mindestens einen Felge ermöglicht, wobei die mindestens eine Innenschicht-Stützstruktur (5) Stützstrukturen in auxetischer Struktur und dreieckiger Geometrie umfasst, die Stöße aus verschiedenen Richtungen beim Kontakt mit der Felgenaußenfläche (7) absorbieren,
wobei das luftlose Rad ferner umfasst:
- mindestens eine gegen den Uhrzeigersinn geneigte Stützstruktur der mittleren Schicht (6), wobei sich die mindestens eine Stützstruktur der mittleren Schicht (6) zwischen der Stützstruktur der inneren Schicht (5) und mindestens einer Stützstruktur der oberen Schicht (4) befindet und aus gegen den Uhrzeigersinn geneigten Stützstrukturen besteht, die Stöße aus verschiedenen Richtungen absorbieren können,
- wobei die mindestens eine Stützstruktur der oberen Schicht (4) im Uhrzeigersinn geneigte auxetische Stützstrukturen umfasst, die mit der Stützstruktur der mittleren Schicht (6) in Kontakt stehen.

2. Luftloses Rad nach Anspruch 1, wobei die Stützstruktur (5) der Reifeninnenschicht mit Industriekunststoffen an der Außenfläche der Felge (7) befestigt ist.

3. Luftloses Rad nach Anspruch 1, wobei der Reifenlaufflächenträger (1), das erste Reifenprofil (9) und der Spaltstopfen (10) für das Spannseil jeweils aus einem der folgenden Materialien bestehen: Gummi, Elastomer oder Kunststoffverbundwerkstoffe.

4. Luftloses Rad nach Anspruch 1, wobei die Felge (2) und das Spannseil (8) aus Metall und/oder Verbundwerkstoff bestehen.

## Revendications

1. Roue sans air configurée pour réduire le risque d'accidents causés par l'explosion de roues gonflées à l'air et pour prévenir les dommages causés à l'environnement par les quantités importantes de déchets de pneus générés par l'éclatement des roues, ladite roue sans air comprenant :
- une pluralité de bandes de roulement remplaçables (9) adaptées à diverses conditions saisonnières, dans laquelle une première bande de roulement (9), parmi ladite pluralité de bandes de roulement remplaçables (9), est montée sur un support de bande de roulement (1) de la roue sans air, ladite première bande de roulement (9) étant en contact avec le sol lorsque le pneu roule sur la route, et dans laquelle, lorsqu'elle est montée sur la roue sans air, chacune des bandes de roulement remplaçables (9) assure l'amortissement des charges auxquelles la roue sans air est soumise en raison du poids du véhicule auquel elle est fixée et de la route sur laquelle elle se déplace,
la roue sans air étant **caractérisée en ce qu'**elle comprend en outre :
- au moins un câble de tension réglable (8) de la bande de roulement, permettant de monter la première bande de roulement (9) sur le support de bande de roulement (1),
- au moins un obturateur d'espace de serrage du câble de tension (1) situé dans le au moins un support de bande de roulement de pneu (1), le au moins un obturateur d'espace de serrage du câble de tension (10) permettant de maintenir la première bande de roulement de pneu (9), et l'ouverture du au moins un obturateur d'espace de serrage du câble de tension (10) permettant de changer la première bande de roulement de pneu (9) selon les conditions saisonnières en desserrant ou en serrant le câble de tension de la bande de roulement de pneu (8),
- au moins une jante (2), comprenant au moins un trou de fixation par boulon (3) ménagé dans la jante (2), permettant de fixer la jante (2) au véhicule au moyen de boulons, une surface extérieure de la jante (2) étant liée à une surface d'une structure de support de couche interne (5) d'un pneu sans air de la roue sans air, dans laquelle ladite au moins une jante relie la structure de support de couche interne (5) du pneu sans air au système d'essieu du véhicule et permet de monter le pneu sur ladite au moins une jante, ladite au moins une structure de support de couche interne (5) comprenant des structures de support présentant une structure auxétique et une géométrie triangulaire, absorbant les impacts provenant de différentes directions au niveau de leur contact avec la surface extérieure (7) de la jante,
dans laquelle la roue sans air comprend en outre :
- au moins une structure de support de couche intermédiaire (6) inclinée dans le sens inverse des aiguilles d'une montre, ladite au moins une structure de support de couche intermédiaire (6) étant située entre la structure de support de couche interne (5) et au moins une structure de support de couche supérieure (4), et étant constituée de structures de support inclinées dans le sens inverse des aiguilles d'une montre, aptes à absorber des impacts susceptibles de provenir de différentes directions,
- la au moins une structure de support de couche supérieure (4) comprenant des structures de support auxétiques inclinées dans le sens des aiguilles d'une montre, en contact avec la structure de support de couche intermédiaire (6).

2. Roue sans air selon la revendication 1, dans laquelle la structure de support de la couche interne du pneu (5) est collée à la surface extérieure de la jante (7) à l'aide de résines industrielles.

3. Roue sans air selon la revendication 1, dans laquelle le support de bande de roulement (1), la première bande de roulement (9) et l'obturateur d'espace de serrage du câble de tension (10) sont chacun réalisés en caoutchouc, en élastomère ou en un matériau composite plastique.

4. Roue sans air selon la revendication 1, dans laquelle la jante (2) et le câble de tension (8) sont réalisés en métal et/ou en matériau composite.
